# EUROPÄISCHE PATENTANMELDUNG

(11) **EP 2 210 846 A1**
(43) Veröffentlichungstag der Anmeldung: **28.07.2010**
(21) Anmeldenummer: 09010024.9
(22) Anmeldetag: 04.08.2009
(51) Int. Cl.: B65H 75/44

(54) **Sicherheitsbremsvorrichtung für Automatik Aufroller Mit FederRückzug (Federtrommeln)**

(30) Priorität: 21.01.2009 DE 202009000715 U
(71) Anmelder: Brinkmann, Ralf, 41515 Grevenbroich (DE)
(72) Erfinder: Brinkmann, Ralf, 41515 Grevenbroich (DE)

(57) **Zusammenfassung**

Vorrichtung die in Verbindung mit automatischen, federbetriebenen
• Seilaufrollern
• Schlauchaufrollern
• Kabel- und Leitungsaufrollern ( auch Federleitungstrommeln genannt)
verwendet werden kann.

Vorrichtung ist eine getriebegesteuerte Sicherheitsbremsvorrichtung die bei einer zu hohen Aufwickelgeschwindigkeit aufgrund Abriss oder unbeabsichtigtes loslassen des ausgezogenen Seils / Schlauch / Kabel / Leitung ein gefährliches "zurückschnellen" dieser verhindert und eine Gefährdung für Mensch und Material ausschließt.

Das in der Vorrichtung integrierte Bremselement wird durch ein vorgeschaltetes Getriebe beschleunigt und sorgt mit einer sehr geringen Reaktionszeit für das Einsetzen der Bremsfunktion.
Die auf dem Automatik Aufroller befindlichen Seile, Schläuche, Kabel, Leitungen werden dadurch mit einer minimalen Geschwindigkeit auf dem Aufroller automatisch aufgewickelt.

Skizze 1 , Bezugszeichen A
zeigt eine mögliche Ausführung eines Automatik Aufrollers an dem unsere Sicherheitsbremsvorrichtung in Verlängerung der Antriebsachse des Aufrollers montiert ist.

Skizze 2 , Bezugszeichen B
zeigt eine mögliche Ausführung eines Automatik Aufrollers an dem unsere Sicherheitsbremsvorrichtung parallel geschaltet zum Aufroller über Antriebskette oder Antriebsriemen montiert ist.

## Beschreibung

Die Erfindung bezieht sich auf eine Vorrichtung die in Verbindung mit automatischen, federbetriebenen
- Seilaufrollern
- Schlauchaufrollern
- Kabel- und Leitungsaufrollern ( auch Federleitungstrommeln genannt )
   verwendet werden kann und bei einem Abriss des ausgezogenen Seils, Schlauch, Kabel, Leitung ein gefährliches "zurückschnellen" dieser verhindert.

Aufgrund der in Automatik Aufrollern integrierten Spiralfedern können Seile, Schläuche, Kabel, Leitungen verschiedener Ausführungen ab- und automatisch wieder aufgewickelt werden ( Prinzip: Automatische Hundeleine ).

Bei den Automatik Aufrollern bislang entsteht jedoch bei einem Riss oder Beschädigung der Verbindung, beziehungsweise unbeabsichtigtes loslassen des Seils, Schlauch, Kabel, Leitung ein "zurückschnellen" dieser mit einem gefährlichen "Peitscheneffekt" für Mensch und Material.

Erfindung ist eine getriebegesteuerte Sicherheitsbremsvorrichtung die in Verlängerung der Antriebsachse des Automatik Aufrollers angeflanscht wird. Bei einer zu hohen Aufwickelgeschwindigkeit aufgrund der vorher genannten Gründe wird das in der Vorrichtung integrierte Bremselement durch das vorgeschaltete Getriebe beschleunigt und sorgt mit einer sehr geringen Reaktionszeit für das Einsetzen der Bremsfunktion.
Die auf dem Automatik Aufroller befindlichen Seile, Schläuche, Kabel, Leitungen werden dadurch mit einer minimalen Geschwindigkeit auf dem Aufroller automatisch aufgewickelt. Der gefährliche "Peitscheneffekt" entfällt komplett. Eine Gefährdung von Mensch und Material wird vollständig ausgeschlossen.

Der Abzug und die federunterstützte Aufwicklung des Seils, Schlauch, Kabel, Leitung kann bei Automatik Aufrollern manuell durch eine Bedienperson oder selbstständig durch einen verfahrbaren Verbraucher erfolgen.
Bei all diesen Ausführungsarten kann unsere Erfindung zum Schutz von Mensch und Material Anwendung finden.

Anwendungsbeispiel der Erfindung ist die Nutzung in Verbindung unserer Automatik Seilaufroller in Stahlerzeugungsanlagen.
Dort werden linear verfahrbare Materialwagen mittels der entstehenden Federkraft des Seilaufrollers nach Nutzung in eine definierte Position zurückgesetzt, zukünftig ohne jegliche Gefährdung bei Seilriss oder Beschädigung der Seilverbindung.

Skizze 1 , Bezugszeichen A
zeigt eine mögliche Ausführung eines Automatik Aufrollers an dem unsere Sicherheitsbremsvorrichtung in Verlängerung der Antriebsachse des Aufrollers montiert ist.

Skizze 2 , Bezugszeichen B
zeigt eine mögliche Ausführung eines Automatik Aufrollers an dem unsere Sicherheitsbremsvorrichtung parallel geschaltet zum Aufroller über Antriebskette oder Antriebsriemen montiert ist.

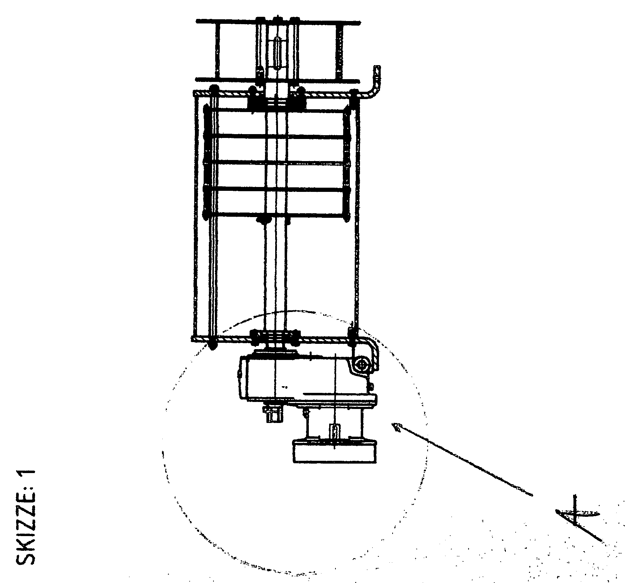

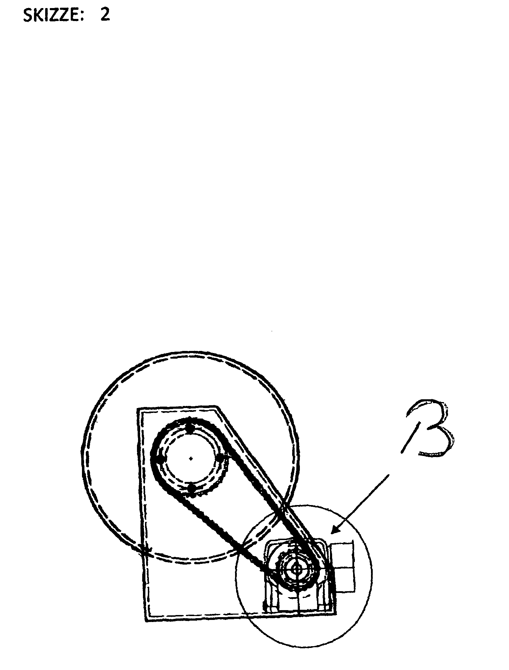

## Patentansprüche

1. Sicherheitsbremsvorrichtung für Automatik Aufroller mit Federrückzug bestückt mit :
• Seil
• Leitung oder Kabel
• Schlauch
**Dadurch gekennzeichnet, dass**
1. Eine getriebegesteuerte speziell konzipierte Fliehkraftbremse in Verlängerung der Antriebsachse des Automatik Aufrollers montiert ist ( siehe Skizze 1, Bezugszeichen: A).
**Dadurch gekennzeichnet, dass**
2. Eine getriebegesteuerte speziell konzipierte Fliehkraftbremse parallel geschaltet zum Automatik Aufroller über Antriebskette oder Antriebsriemen montiert ist ( siehe Skizze 2, Bezugszeichen: B ).
**Dadurch gekennzeichnet, dass**
3. Die Bestückung des Automatik Aufrollers in Verbindung der Sicherheitsbremsvorrichtung mit Seil oder Leitung / Kabel oder Schlauch erfolgen kann.
**Dadurch gekennzeichnet, dass**
4. Die Betätigung des Automatik Aufrollers in Verbindung der Sicherheitsbremsvorrichtung durch eine Bedienperson ( manuell ) oder durch eine Verfahreinheit oder verfahrbaren Verbraucher ( automatisch ) erfolgt.
